# EUROPÄISCHE PATENTANMELDUNG

(11) **EP 3 315 773 A1**
(43) Veröffentlichungstag der Anmeldung: **02.05.2018**
(21) Anmeldenummer: 16020414.5
(22) Anmeldetag: 25.10.2016
(51) Int. Cl.: F04B 23/02, B01D 3/14

(54) **PUMPENVORLAGEBEHÄLTER, REKTIFIKATIONSSYSTEM UND VERFAHREN ZUR TIEFTEMPERATURREKTIFIKATION**

(71) Anmelder: Linde Aktiengesellschaft, 80331 München (DE)
(72) Erfinder: Matten, Christian, 82049 Pullach (DE); Baus, Michael, 82166 Gräfelfing (DE); Lauchner, Daniela, 86405 Meitingen (DE); Flegiel, Felix, 80687 München (DE)
(74) Vertreter: Richmond, Sarah

(57) **Zusammenfassung**

Es wird ein Pumpenvorlagebehälter (100) für eine einer Pumpe (208) zuzuführende tiefkalte Flüssigkeit, mit einem sich zwischen einem Behältersumpf (101) und einem Behälterkopf (102) erstreckenden Behälterinnenraum (103), der einen in einem ersten Abstand in Richtung des Behälterkopfs (102) von dem Behältersumpf (101) beabstandeten Flüssigkeitseinspeisebereich (104) und einen in einem zweiten Abstand in Richtung des Behälterkopfs (102) von dem Behältersumpf (101) beabstandeten Flüssigkeitsentnahmebereich (105) umfasst, wobei der zweite Abstand größer als der erste Abstand ist, vorgeschlagen. Es ist vorgesehen, dass in dem Flüssigkeitseinspeisebereich (104) eine Flüssigkeitseinspeiseöffnung (106) ausgebildet ist, dass der Behälterinnenraum (103) in dem Flüssigkeitseinspeisebereich (104) zumindest teilweise mittels einer Trennwand (106) unterteilt ist, die derart angeordnet ist, dass eine ihrer Flächen (107) in Richtung der Flüssigkeitseinspeiseöffnung (106) ausgerichtet ist, und dass sich der Behältersumpf (101) insbesondere in einer dem Behälterinnenraum (103) abgewandten Richtung verjüngt und der Behältersumpf (101) einen Feststoffabzug (108) aufweist. Ein entsprechendes Rektifikationssystem (200) und ein Verfahren zur Tieftemperaturrektifikation sind ebenfalls Gegenstand der vorliegenden Erfindung.

## Beschreibung

Die Erfindung betrifft einen Pumpenvorlagebehälter, ein Rektifikationssystem mit einem Pumpenvorlagebehälter sowie ein Verfahren zur Tieftemperaturrektifikation gemäß den Oberbegriffen der unabhängigen Patentansprüche.

### Stand der Technik

In eine Reihe unterschiedlicher technischer Gebiete werden Tieftemperaturrektifikationsverfahren eingesetzt. Ein Beispiel hierfür ist die Bearbeitung von Stoffgemischen aus Dampfspaltverfahren, wie sie grundsätzlich aus dem Stand der Technik bekannt und beispielsweise im Artikel "Ethylene" in Ullmann's Encyclopedia of Industrial Chemistry erläutert sind.

Enthalten entsprechende Stoffgemische Methan und ggf. tiefer als Methan siedende Komponenten wie Wasserstoff und Kohlenmonoxid, können im Zuge von deren trenntechnischer Bearbeitung sogenannte Demethanizer zum Einsatz kommen, in denen das Methan und ggf. die leichteren Komponenten von höher als Methan siedenden Komponenten, insbesondere von schwereren Kohlenwasserstoffen, abgetrennt werden. Ein entsprechendes Einsatzgemisch kann bereits seinerseits aus einer Aufbereitung, beispielsweise einem sogenannten Deethanizer, stammen. In diesem speziellen Fall sind in dem Einsatzgemisch als schwerere Kohlenwasserstoffe lediglich noch solche mit zwei Kohlenstoffatomen enthalten.

In einem Demethanizer wird eine Tieftemperaturrektifikationskolonne verwendet, die derart ausgebildet ist und betrieben wird, dass sich an ihrem Kopf ein Kopfgas bildet, das überwiegend oder ausschließlich das Methan und ggf. die leichter als Methan siedenden Komponenten enthält. Im Sumpf der Tieftemperaturrektifikationskolonne wird hingegen eine Sumpfflüssigkeit abgeschieden, die überwiegend oder ausschließlich die höher als Methan siedenden Komponenten enthält.

Um eine derartige Tieftemperaturrektifikationskolonne betreiben zu können, ist es typischerweise erforderlich, in ihrem Kopfbereich einen flüssigen, methanreichen Rücklauf aufzugeben. Dieser wird üblicherweise dadurch gebildet, dass zumindest ein Anteil des Kopfgases der Tieftemperaturrektifikationskolonne in einem Kopfkondensator verflüssigt und mittels einer Pumpe auf die Tieftemperaturrektifikationskolonne zurückgepumpt wird.

Zum Abscheiden des verflüssigten Anteils des Kopfgases wird ein Kondensatabscheider eingesetzt, aus dem die Pumpe zum Zurückpumpen des verflüssigten Anteils des Kopfgases gespeist wird. Dabei ist zu vermeiden, dass der Pumpe Gas in nennenswertem Umfang zugeführt wird, das diese ansonsten beschädigen könnte. Ebenfalls ist es nachteilig, wenn der Pumpe feste Komponenten zugeführt werden, beispielsweise Restkohlendioxid, das sich in einem entsprechenden Kopfgas befindet und aus diesem bei der Verflüssigung fest abgeschieden werden kann. Daher wird die Pumpe typischerweise nicht direkt aus dem Abscheidebehälter gespeist, sondern über einen zwischengeschalteten Pumpenvorlagebehälter, der auch als "Pumpenkammer" bezeichnet wird.

Wenngleich zuvor auf ein Dampfspaltverfahren und die Bearbeitung eines hierbei erzeugten Gasgemisches Bezug genommen wurde, eignet sich die vorliegende Erfindung in gleicher Weise für andere Verfahren, insbesondere solche, in denen die erwähnten Demethanizer zum Einsatz kommen, beispielsweise auch zur Erdgasbearbeitung. Die Erfindung ist immer dann einsetzbar und sinnvoll, wenn eine entsprechende Tieftemperaturrektifikation vorgenommen wird und/oder tiefkalte Flüssigkeiten mittels Pumpen gefördert werden.

Die vorliegende Erfindung stellt sich die Aufgabe, eine entsprechend tiefkalte Flüssigkeit vorzugsweise ohne bzw. mit nur sehr geringen Anteilen an gasförmigen Komponenten und Feststoffen einer Pumpe zuführen zu können.

### Offenbarung der Erfindung

Vor diesem Hintergrund schlägt die vorliegende Erfindung einen Pumpenvorlagebehälter, ein Rektifikationssystem mit einem Pumpenvorlagebehälter und ein Verfahren zur Tieftemperaturrektifikation mit den Merkmalen der unabhängigen Patentansprüche vor. Bevorzugte Ausgestaltungen sind jeweils Gegenstand der abhängigen Patentansprüche sowie der nachfolgenden Beschreibung.

### Vorteile der Erfindung

Die vorliegende Erfindung beruht auf der Erkenntnis, dass es besonders vorteilhaft ist, einen Pumpenvorlagebehälter einzusetzen, der dafür vorgesehen ist, eine tiefkalte Flüssigkeit, die einer Pumpe zugeführt werden soll, zwischenzuspeichern und in geeignetem Zustand der Pumpe zuzuführen. Der Pumpenvorlagebehälter ist in einem Flüssigkeitseinspeisebereich mit einer Trennwand versehen. Vorteilhafterweise weist der Pumpenvorlagebehälter außerdem einen sich verjüngenden Behältersumpf auf, so dass sich in dem Behältersumpf sammelnde Feststoffe über einen ebenfalls vorgesehenen Feststoffabzug aus dem Behältersumpf abgezogen werden können.

Die vorliegende Erfindung schlägt dabei im Detail einen Pumpenvorlagebehälter für eine einer Pumpe zuzuführende tiefkalte Flüssigkeit vor, der einen sich zwischen einem Behältersumpf und einem Behälterkopf erstreckenden Behälterinnenraum aufweist. Der Behälterinnenraum weist einen in einem ersten Abstand in Richtung des Behälterkopfs von dem Behältersumpf beabstandeten Flüssigkeitseinspeisebereich und einen in einem zweiten Abstand in Richtung des Behälterkopfs von dem Behältersumpf beabstandeten Flüssigkeitsentnahmebereich auf. Wird ein derartiger Pumpenvorlagebehälter fachüblich eingesetzt, befindet sich der Behältersumpf am tiefsten Punkt eines entsprechenden Pumpenvorlagebehälters, der Behälterkopf am höchsten Punkt. Typischerweise ist der Behälterraum von einer zylindrischen Behälterwand umgeben, es können jedoch auch andere geometrische Ausgestaltungen vorgesehen sein.

Insbesondere kann sich zwischen dem Behälterkopf und dem Behältersumpf eine geometrische Achse erstrecken, um die der Behältermantel und damit der Behälterinnenraum zentriert sind. Bei einem Pumpenvorlagebehälter der hier diskutieren Art handeln es sich typischerweise um einen langgestreckten, kolonnenähnlichen Apparat, der jedoch im Gegensatz zu Rektifikations- bzw. Absorptionskolonnen nicht primär zur Stofftrennung, sondern zur Flüssigkeitsspeicherung eingesetzt wird.

Der erste Abstand, d.h. jener zwischen dem Behältersumpf und dem Flüssigkeitseinspeisebereich, ist kleiner als der zweite Abstand, d.h. der Abstand zwischen dem Behältersumpf und dem Flüssigkeitsentnahmebereich. Mit anderen Worten ist bei fachüblicher Verwendung eines entsprechenden Pumpenvorlagebehälters der Flüssigkeitsentnahmebereich oberhalb des Flüssigkeitseinspeisebereichs angeordnet.

Ein Flüssigkeitseinspeisebereich bzw. ein Flüssigkeitsentnahmebereich ist dabei als Bereich um eine Flüssigkeitseinspeiseöffnung bzw. die Mündung einer Flüssigkeitseinspeiseleitung in den Behälterinnenraum einerseits und als Bereich um eine Flüssigkeitsentnahmeöffnung bzw. den Ausgang einer Flüssigkeitsentnahmeleitung aus dem Behälterinnenraum andererseits definiert. Ein Flüssigkeitseinspeisebereich ist der Bereich, der durch die Flüssigkeitseinspeisung direkt beeinflusst ist, beispielsweise ein Bereich erhöhter Turbulenzen oder Strömungen. Entsprechendes gilt sinngemäß für den Flüssigkeitsentnahmebereich. Zwischen dem Flüssigkeitseinspeisebereich und dem Flüssigkeitsentnahmebereich können weitere Bereiche, insbesondere bloße Speicherbereiche, aber auch die nachfolgend erläuterten Gassammelbereiche, vorgesehen seien. Unterhalb des Flüssigkeitseinspeisebereichs befindet sich der Behältersumpf, oberhalb des Flüssigkeitsentnahmebereichs ein weiterer Bereich des Behälterinnenraums, der je nach Füllstand des Pumpenvorlagebehälters beispielsweise mit Flüssigkeit oder verdampftem Gas gefüllt ist.

Im Rahmen der vorliegenden Erfindung ist nun vorgesehen, dass sich in dem Flüssigkeitseinspeisebereich eine Flüssigkeitseinspeiseöffnung befindet, und dass der Behälterraum in dem Flüssigkeitseinspeisebereich zumindest teilweise mittels einer Trennwand unterteilt ist, die derart angeordnet ist, dass eine ihrer Flächen in Richtung der Flüssigkeitseinspeiseöffnung ausgerichtet ist. Vorteilhafterweise verjüngt sich ferner der Behältersumpf in einer dem Behälterinnenraum abgewandten Richtung und weist einen Feststoffabzug auf.

Ist hier davon die Rede, dass "eine der Flächen der Trennwand in Richtung der Flüssigkeitseinspeiseöffnung ausgerichtet" ist, sei hierunter eine Anordnung verstanden, in der eine entsprechende Trennwand bzw. die der Flüssigkeitseinspeiseöffnung zugewandte Fläche der Trennwand als Staueinrichtung bzw. Wehr wirkt, auf das die über die Flüssigkeitseinspeiseöffnung eingespeiste tiefkalte Flüssigkeit prallt und daher eine Bewegungsrichtungsänderung erfährt. Durch die Trennwand wird im Rahmen der vorliegenden Erfindung die über die Flüssigkeitseinspeiseöffnung eingespeiste Flüssigkeit zum Teil nach oben und zum Teil nach unten abgelenkt, so dass ein Teil dieser Flüssigkeit unterhalb der Trennwand an dieser vorbei fließt und ein weiterer Teil oberhalb der Trennwand in Richtung des Behälterkopfs in den Behälterinnenraum aufsteigt. Durch diese Maßnahme kann sichergestellt werden, dass Totzonen im Behältersumpf vermieden werden. Dies ist besonders vorteilhaft, weil auf diese Weise ein durch Verdampfen des Methans hervorgerufener Ausfall von Kohlendioxid minimiert werden kann.

Die vorteilhaften Effekte der erfindungsgemäßen Trennwand sind unter anderem darauf zurückzuführen, dass der nach unten strömende Teil der tiefkalten Flüssigkeit, die über die Flüssigkeitseinspeiseöffnung zugeführt wird, im Behältersumpf einen Konzentrationsausgleich bewirkt. Zu diesem Zweck ist der Behältersumpf vorzugsweise nicht mittels der Trennwand unterteilt. Auch der Bereich oberhalb des Flüssigkeitseinspeisebereichs ist vorzugsweise nicht von der Trennwand unterteilt.

Der vorteilhafterweise vorgesehene, sich verjüngende Behältersumpf, der insbesondere auch mittels eines Flanschs trennbar an einen Rest des Behälters angebracht werden kann, verjüngt sich insbesondere konisch in Richtung des Feststoffabzugs. Auf diese Weise können sich dennoch abscheidende Feststoffe wie beispielsweise fest abgeschiedenes Kohlendioxid aus dem Pumpenvorlagebehälter abgezogen werden. Ein entsprechender Pumpenvorlagebehälter kann beispielsweise einen Durchmesser von einem und eine Höhe von sieben Metern aufweisen.

Besonders vorteilhaft ist es zur Realisierung der erläuterten Effekte, wenn eine an die Flüssigkeitseinspeiseöffnung angebundene Flüssigkeitseinspeiseleitung in ihrem Endbereich eine Leitungsachse aufweist und wenn die Trennwand derart angeordnet ist, dass ihre in Richtung der Flüssigkeitseinspeiseöffnung angeordnete bzw. ausgerichtete Fläche in einem Winkel von 80 bis 100° zu dieser Leitungsachse angeordnet ist. Unter einer "Leitungsachse" wird hierbei keine mechanische Achse verstanden, sondern die geometrische Achse, um die eine insbesondere zylindrische Leitung zentriert ist. Ist die Leitungsachse in dem erwähnten Winkel, insbesondere auch in dem Winkel von im Wesentlichen 90°, d.h. rechtwinklig, zu der in Richtung der Flüssigkeitseinspeiseöffnung ausgerichteten Fläche orientiert, prallt einströmendes Fluid auf die Trennwand und wird hier zu geeigneten Teilen nach oben und unten abgelegt. Es sind jedoch auch andere Winkelstellungen möglich, die Trennwand braucht auch nicht als ebene Fläche ausgebildet sein, sondern kann insbesondere auch Flüssigkeitsleitstrukturen aufweisen.

Vorteilhafterweise weist der Behälterinnenraum in dem Flüssigkeitseinspeisebereich einen Querschnitt auf, der durch die Trennwand in zwei Teile unterteilt wird. Die Unterteilung ist also entsprechend der fachüblichen Anordnung eines entsprechenden Pumpenvorlagebehälters senkrecht oder im Wesentlichen senkrecht unterteilt. Vorzugsweise werden dabei zwei im Wesentlichen gleiche Teile gebildet, d.h. der Flächeninhalt der beiden Teile des Querschnitts unterscheidet sich um nicht mehr als 20% voneinander. Insbesondere sind die beiden Teile des Querschnitts identisch.

Besonders vorteilhaft ist es, wenn der Behälterinnenraum zwischen dem Flüssigkeitseinspeisebereich und dem Flüssigkeitsentnahmebereich einen Gassammelbereich umfasst, der Gassammelböden aufweist. Die Gassammelböden weisen dabei in Richtung des Behältersumpfs ausgerichtete Gassammelstrukturen auf, und an die Gassammelböden sind jeweils Gasleitungen angebracht, die in Richtung des Behälterkopfs verlaufen. Unter einer "Gassammelstruktur" wird dabei eine Struktur verstanden, die an einem entsprechenden Sammelboden angebracht ist oder in diesem ausgebildet ist, welche bewirkt, dass in dem Behälterinnenraum aufsteigende Gasblasen an dem Gassammelboden zurückgehalten werden.

Im einfachsten Fall können die Gassammelstrukturen als sich in Richtung des Behältersumpfs öffnende Wannenstrukturen ausgebildet sein. Wird beispielsweise ein flacher Gassammelboden verwendet, der eine Lasche aufweist, die sich in Richtung des Behältersumpfs erstreckt, hält eine entsprechende Struktur aufsteigende Gasblasen zurück. Diese Gasblasen können an den Gassammelstrukturen bzw. an einem entsprechenden Gassammelboden gesammelt und über eine entsprechende Leitung nach oben abgelenkt werden. Entsprechende Gassammelböden sind beispielsweise auch in der DE 102 012 014 103 A1 beschrieben. Entsprechende Gassammelböden können anstelle von wannenförmigen Strukturen auch insbesondere Rippenstrukturen aufweisen, in denen sich Gasblasen sammeln, welche anschließend über die Gasleitungen abgeleitet werden können.

Besonders vorteilhaft ist es, wenn in einem entsprechenden Pumpenvorlagebehälter in dem Gassammelbereich zumindest zwei Gassammelböden vorgesehen sind, die einen Querschnitt des Behälterinnenraums jeweils teilweise abdecken und zueinander versetzt angeordnet sind. In vertikaler Draufsicht ist dabei vorteilhafterweise jeder Bereich der vertikalen Projektion des Behälterinnenraums durch einen oder mehrere Gassammelböden abgedeckt. In einem entsprechenden Behälterinnenraum aufsteigende Gasblasen treffen dabei, sofern keine laterale Ablenkung erfolgt und diese im Wesentlichen senkrecht aufsteigen, zwangsläufig auf einen Gassammelboden und werden daher über die Gassammelleitungen abgeleitet.

Beispielsweise können entsprechende Gassammelböden jeweils ca. 80% der Querschnittsfläche eines entsprechenden Pumpenvorlagebehälters abdecken. An jedem der Gassammelböden wird die in dem Pumpenvorlagebehälter aufsteigende tiefkalte Flüssigkeit um im Wesentlichen 90° abgelenkt. Der Abstand zwischen den Gassammelböden wird dabei vorzugsweise derart gewählt, dass durch eine geringe Quergeschwindigkeit nur noch kleinste Gasblasen nach oben mitgerissen werden können, welche nicht mehr schädlich für die nachgeordnete Pumpe sind. Größere Gasblasen steigen stets im Wesentlichen senkrecht zur Strömungsrichtung der Flüssigkeit auf, werden in den Gassammelböden aufgefangen und mittels der vorgesehenen Gasleitungen am Flüssigkeitsaustritt, d.h. einer Flüssigkeitsentnahmeöffnung in einem Flüssigkeitsentnahmebereich, vorbeigeleitet. Der "letzte", unterhalb der Flüssigkeitsentnahmeöffnung angeordnete Gassammelboden kann daher insbesondere eine Gasleitung aufweisen, die oberhalb der Flüssigkeitsentnahmeöffnung bzw. deren Mündung in den Behälterinnenraum endet.

Vorteilhafterweise ist, wie bereits erwähnt, in dem Flüssigkeitsentnahmebereich eine Flüssigkeitsentnahmeöffnung ausgebildet, die insbesondere einen Wirbelbrecher aufweisen kann, und die auf diese Weise Flüssigkeit aus dem Behälterinnenraum herausführen kann. Ein Wirbelbrecher ist im Rahmen der vorliegenden Erfindung von besonderem Vorteil, um durch Turbulenzen einerseits keine Gasblasen abzulenken und andererseits kein zusätzliches Ausgasen zu provozieren.

Die vorliegende Erfindung erstreckt sich auch auf ein Rektifikationssystem mit einer Rektifikationskolonne, die einen Kolonnenkopf aufweist, wobei der Kolonnenkopf mittels einer ersten Leitung mit einer Kühleinrichtung, und die Kühleinrichtung mittels einer zweiten Leitung mit einem Kondensatabscheider verbunden ist, der eine Flüssigkeitsentnahmeöffnung aufweist. Insoweit gleicht ein entsprechendes Rektifikationssystem bekannten Rektifikationssystemen mit sogenannten Kopfkondensatoren bzw. Kopfkondensationseinrichtungen. Eine entsprechende Kühleinrichtung wird typischerweise unter Verwendung eines Kühlmittels gekühlt, das je nach der Zusammensetzung und dem Druck des von dem Kolonnenkopf abgezogenen Kopfgases ausgewählt wird. Im Fall von zu kondensierenden Methan handelt es sich mit dem entsprechenden Kühlmittel insbesondere um über einen Turboexpander entspanntes Methan, das mittels dessen eine Teilkondensation eines entsprechenden Kopfgases bewirkt werden kann. Die Kühleinrichtung kann insbesondere einen Wärmetauscher oder andere bekannte Kühleinrichtungen umfassen. Ist hier davon die Rede, dass der Kondensatabscheider eine Flüssigkeitsentnahmeöffnung aufweist, ist nicht ausgeschlossen, dass weitere Fluidentnahmeöffnungen vorgesehen sein können, die insbesondere zur Entnahme eines nicht als Rücklauf auf die Rektifikationskolonne verwendeten Anteils des Kopfkondensats oder eines gasförmig verbleibenden Anteils des Kopfgases vorgesehen sein können.

Das vorgeschlagene Rektifikationssystem zeichnet sich durch einen Pumpenvorlagebehälter aus, wie er zuvor erläutert wurde, wobei die Flüssigkeitseinspeiseöffnung des Pumpenvorlagebehälters an die Flüssigkeitsentnahmeöffnung des Kondensatabscheiders angebunden ist. Zu Merkmalen und Vorteil eines entsprechenden Pumpenvorlagebehälters, dessen Vorteile auch das erfindungsgemäße Rektifikationssystem betreffen, sei auf die obigen Erläuterungen ausdrücklich verwiesen.

Vorteilhafterweise ist die in einem entsprechenden Rektifikationssystem eingesetzte Pumpe dafür eingerichtet, die tiefkalte Flüssigkeit aus dem Fluidentnahmebereich des Pumpenvorlagebehälters auf den Kolonnenkopf der Rektifikationskolonne zurückzuführen. Ein entsprechender Pumpenvorlagebehälter in einem derartigen Rektifikationssystem kann insbesondere einen Gasauslass aufweisen, der mit einem Gaseinlass des Kondensatabscheiders verbunden ist. Auf diese Weise können verdampfte Anteile eines entsprechenden tiefkalten Fluids erneut in den Kondensatabscheider zurückgeführt und daher dort beispielsweise gasförmig abgezogen werden.

Die vorliegende Erfindung betrifft ferner ein Verfahren zur Tieftemperaturrektifikation, das sich dadurch auszeichnet, dass ein zuvor erläuterter Pumpenvorlagebehälter oder ein Rektifikationssystem, wie es zuvor erläutert wurde, verwendet wird. Auch hierzu gelten die Erläuterungen zu den zuvor erläuterten Vorteilen in entsprechender Weise.

Vorteilhafterweise wird in einem derartigen Verfahren die tiefkalte Flüssigkeit über die Flüssigkeitseinspeiseöffnung in den Pumpenvorlagebehälter eingespeist, wobei die tiefkalte Flüssigkeit Methan aufweist und im Pumpenvorlagebehälter teilweise verdampft, wobei aus der tiefkalten Flüssigkeit ein oder mehrere Feststoffe abgeschieden werden und der unter die Feststoffe aus dem Behältersumpf über den Feststoffabzug abgezogen werden. Wie erwähnt, eignet sich ein entsprechender Pumpenvorlagebehälter insbesondere zum Einsatz in einem Rektifikationssystem, und damit auch in einem entsprechenden Verfahren, bei dem ein sogenannter Demethanizer zum Einsatz kommt.

Vorteilhafterweise weist die tiefkalte Flüssigkeit eine Temperatur von -90 bis -110° C auf und der Pumpenvorlagebehälter wird auf einem Druckniveau von 19 bis 25 bar (abs.) betrieben.

Die Erfindung wird nachfolgend unter Bezugnahme auf die beigefügten Zeichnungen näher erläutert, welche Ausführungsformen der vorliegenden Erfindung veranschaulichen.

### Kurze Beschreibung der Zeichnungen

Figur 1 zeigt ein Rektifikationssystem gemäß einer Ausführungsform der Erfindung in schematischer Darstellung.
Figur 2 zeigt einen Pumpenvorlagebehälter gemäß einer Ausführungsform der Erfindung in schematischer Darstellung.
Figur 3 zeigt Teile eines Rektifikationssystems gemäß einer Ausführungsform der Erfindung in schematischer Darstellung.
Figuren 4a - 4c zeigen Details eines Pumpenvorlagebehälters gemäß einer Ausführungsform der Erfindung.

In den Figuren sind einander entsprechende Elemente mit identischen Bezugszeichen angegeben und werden der Übersichtlichkeit halber nicht wiederholt erläutert.

### Ausführliche Beschreibung der Zeichnungen

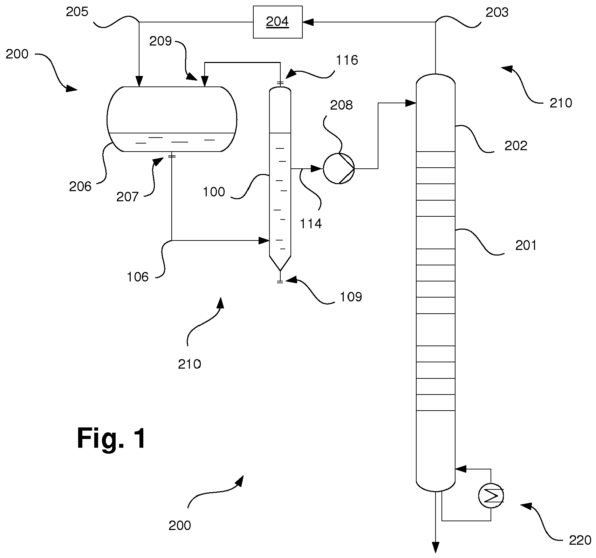

In Figur 1 ist ein Rektifikationssystem gemäß einer besonders bevorzugten Ausführungsform der vorliegenden Erfindung schematisch veranschaulicht und insgesamt mit 200 bezeichnet.

Das Rektifikationssystem 200 umfasst eine stark vereinfacht veranschaulichte Rektifikationskolonne 201. Diese dient, wie erläutert, dazu, aus einem Einsatzgemisch Methan oder ein methanhaltiges Gasgemisch abzutrennen. Hierzu weist die Rektifikationskolonne 201 einen Kopfkondensator grundsätzlich bekannter Art auf, der hier insgesamt mit 210 bezeichnet ist.

In dem Kopfkondensator 210 ist ein Kolonnenkopf, hier mit 202 bezeichnet, der Rektifikationskolonne 201 mittels einer Leitung 203, die vorstehend auch als "erste Leitung" bezeichnet wurde, mit einer geeigneten Kühleinrichtung 204 verbunden. Die Kühleinrichtung 204 kann insbesondere einen oder mehrere Wärmetauscher umfassen, die mit einem geeigneten Kältemittel, beispielsweise entspanntem Methan, betrieben werden. Die Rektifikationskolonne 201 kann über einen Sumpfverdampfer 220 verfügen, der jedoch in bekannter Weise ausgebildet sein kann und daher der Übersichtigkeit halber nicht im Detail erläutert wird.

In oder stromab der Kühleinrichtung 204 bildet sich aus einem durch die erste Leitung 203 geführten Kopfgasrektifikationskolonne 201 ein Zweiphasengemisch, welches über eine Leitung 205, die zuvor auch als "zweite Leitung" bezeichnet wurde, einem Kondensatabscheider 206 zugeführt wird. In dem Kondensatabscheider 206 scheidet sich ein Kondensat ab, das über eine Flüssigkeitsentnahmeöffnung 207 aus dem Kondensatabscheider abgezogen werden kann.

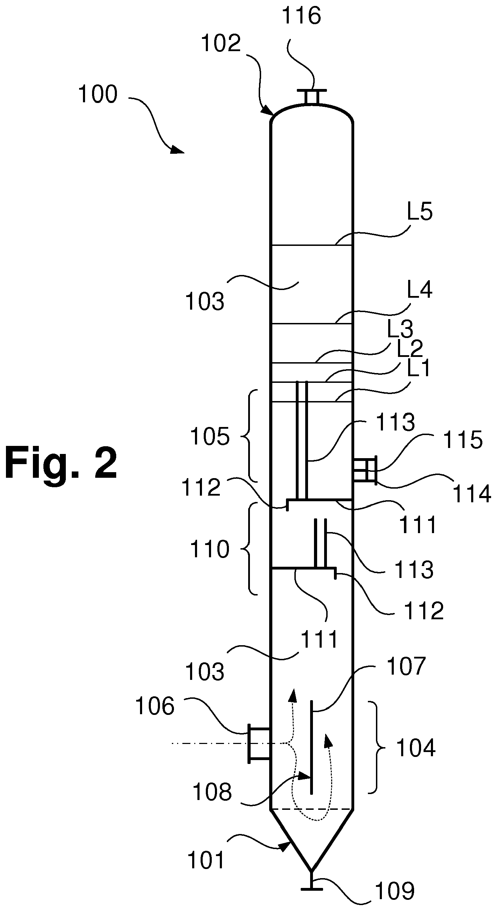

Ziel der Kondensatabscheidung ist es insbesondere, einen flüssigen Rücklauf bereitzustellen, welcher mittels einer Pumpe 208 auf den Kolonnenkopf der 202 der Rektifikationskolonne 201 zurückbefördert werden kann. Wie zuvor erläutert, kann es hierbei jedoch dazu kommen, dass ein entsprechendes Kondensat ausgast und/oder Feststoffe abgeschieden werden. Um dies zu vermeiden, wird ein Pumpenvorlagebehälter 100 verwendet, der hier stark vereinfacht gezeigt und insgesamt mit 100 bezeichnet ist. Ein gemäß einer Ausführungsform der Erfindung verwendbarer Pumpenvorlagebehälter 100 wird unter Bezugnahme auf die Figur 2 näher erläutert.

Dem Pumpenvorlagebehälter 100 wird dabei über eine Flüssigkeitseinspeiseöffnung 106, die ebenfalls in Figur 2 näher veranschaulicht ist, zumindest ein Teil des Kondensats aus dem Kondensatabscheider 206 zugeführt. Dem Kondensatabscheider 206 können insbesondere ein oder mehrere weitere flüssige oder gasförmige Ströme über entsprechende Leitungen entnommen werden, wie hier nicht im Detail veranschaulicht. Ein in dem Pumpenvorlagebehälter 100 verdampfter Anteil des Kondensats kann über einen Gasauslass 116 in den Kondensatabscheider 206 über einen Gaseinlass 209 zurückgeführt werden. Sich abscheidende Feststoffe können über einen Feststoffabzug 109 aus dem Pumpenvorlagebehälter 100 abgezogen werden. Auf diese Weise kann sichergestellt werden, dass der Pumpe lediglich eine tiefkalte Flüssigkeit ohne gasförmige und feste Anteile zugeführt wird. Dies erfolgt über eine Flüssigkeitsentnahmeöffnung 114.

Wie bereits erwähnt, ist in Figur 2 ein entsprechender Pumpenvorlagebehälter gemäß einer Ausführungsform der Erfindung in größerem Detail schematisch veranschaulicht und insgesamt mit 100 bezeichnet.

Der Pumpenvorlagebehälter 100 umfasst einen sich zwischen einem Behältersumpf 101 und einem Behälterkopf 102 erstreckenden Behälterinnenraum 103. Wie mit einer gestrichelten Linie veranschaulicht, kann insbesondere der Behältersumpf 101 über einen geeigneten Flansch lösbar an einen den Behälterinnenraum definierenden und hier nicht besonders bezeichneten Mantel lösbar angebracht sein. Der Behälterinnenraum umfasst einen in einem ersten Abstand in Richtung des Behälterkopfs 102 von dem Behältersumpf 101 beanstandeten Flüssigkeitseinspeisebereich 104 sowie einen in einem zweiten Abstand in Richtung des Behälterkopfs von dem Behältersumpf beanstandeten Flüssigkeitsentnahmebereich 105. Der zweite Abstand ist dabei größer als der erste Abstand, d.h. der Flüssigkeitsentnahmebereich 105 liegt im Betrieb des Pumpenvorlagebehälters 100 oberhalb des Flüssigkeitseinspeisebereichs 104. In den Flüssigkeitseinspeisebereich 104 ist die Flüssigkeitseinspeiseöffnung 106 angeordnet, die bereits unter Bezugnahme auf die Figur 1 erwähnt wurde.

In dem Flüssigkeitseinspeisebereich 104 ist der Behälterinnenraum 103 zumindest teilweise mittels einer Trennwand 107 unterteilt, die derart angeordnet ist, dass eine ihrer Flächen, hier mit 108 bezeichnet, in Richtung der Flüssigkeitseinspeiseöffnung 106 ausgerichtet ist. Ferner verjüngt sich der Behältersumpf 101 im dargestellten Beispiel in einer dem Behälterinnenraum 103 abgewandten Richtung und dieser weist einen Feststoffabzug 109 auf, der ebenfalls bereits in Figur 1 gezeigt und erwähnt wurde.

Wie in Form einer punktierten Flüssigkeitsströmung veranschaulicht, wird über die Flüssigkeitseinspeiseöffnung 106 eingespeiste Flüssigkeit an der in Richtung der Flüssigkeitseinspeiseöffnung 106 ausgerichteten Fläche 108 der Trennwand 107 gestaut. Ein Teil der Flüssigkeit strömt unterhalb der Trennwand 108 in Richtung des Behältersumpfs 101 und von dort aus in den Behälterinnenraum 103 zurück. Ein weiterer Teil strömt direkt in Richtung des Behälterkopfs in den Behälterinnenraum 103. Auf diese Weise lassen sich, wie erwähnt, Totvolumina im Behältersumpf 101 vermeiden. Die Vermeidung entsprechender Totvolumina bzw. Totzonen ist, wie erwähnt, insbesondere deshalb vorteilhaft, weil hierdurch ein Ausfall von Kohlendioxid durch verdampfendes Methan verringert werden kann. Dennoch im festen Zustand ausfallendes Kohlendioxid sammelt sich im Behältersumpf 101, der insbesondere konisch ausgebildet ist, und kann über den Feststoffabzug 109 aus diesem abgezogen werden. Es versteht sich dabei, dass der Behältersumpf zumindest teilweise nicht mittels der Trennwand 107 unterteilt ist.

Wie ebenfalls erwähnt, ist an die Flüssigkeitseinspeiseöffnung 106 eine Flüssigkeitseinspeiseleitung mit einer Leitungsachse angebunden, die hier strichpunktiert veranschaulicht ist. Wie ebenfalls bereits erwähnt, ist hierbei der Begriff der "Leitungsachse" im geometrischen, nicht im mechanischen Sinn zu verstehen. Die Leitungsachse verläuft insbesondere durch den Mittelpunkt des Leitungsquerschnitts, der typischerweise kreisrund ausgebildet ist. Die Trennwand 107 ist dabei insbesondere senkrecht zu der Flüssigkeitseinspeiseleitung bzw. deren in den Pumpvorlagebehälter mündenden Teil ausgerichtet, d.h. die in Richtung der Flüssigkeitseinspeiseöffnung 106 orientierte Fläche 108 der Trennwand 107 ist insbesondere in einem Winkel von 80 bis 100°, insbesondere senkrecht, zu der Leitungsachse angeordnet. Wie ebenfalls erwähnt, ist die Trennwand 107 insbesondere mittig in dem Behälterinnenraum in dem Flüssigkeitseinspeisebereich angeordnet, d.h. der Behälterinnenraum, der in dem Flüssigkeitsbereich einen bestimmten Querschnitt, beispielsweise einen kreisförmigen Querschnitt aufweist, ist wird in zwei Hälften unterteilt, deren Flächeninhalt vorzugswiese identisch ist, sich jedoch insbesondere um nicht mehr als 20% unterscheidet.

Zwischen dem Flüssigkeitseinspeisebereich 104 und dem Flüssigkeitsentnahmebereich 105 ist in dem Pumpenvorlagebehälter 100 bzw. dessen Behälterinnenraum 103 ein Gassammelbereich 110 ausgebildet, der insbesondere dazu dient, aus dem Flüssigkeitsentnahmebereich Flüssigkeit gasfrei entnehmen zu können. Hierzu weist der Behälterinnenraum 103 in dem Gassammelbereich 110 Gassammelböden 111 auf. Diese Gassammelböden sind jeweils mit Gassammelstrukturen 112 versehen, die in Richtung des Behältersumpfs 101 ausgerichtet sind. Ferner tragen die Gassammelböden 111 jeweils Gasleitungen 113, die in Richtung des Behälterkopfs verlaufen. Im dargestellten Beispiel sind die Gassammelstrukturen 112, die an die Gassammelböden 111 angebracht sind, in Form von Nasen ausgebildet, wodurch die Gassammelböden zusammen mit diesen Gassammelstrukturen nach Art von Wannen ausgebildet sind, die sich in Richtung des Behältersumpfs 101 öffnen.

In der Flüssigkeit in dem Behälterinnenraum 103 aufsteigende Gasblasen sammeln sich in diesen Wannen und können über die Gasleitungen 113 jeweils nach oben abgeführt werden. Die Anordnung der Gassammelböden 111 mit den Gassammelstrukturen 112 und den Gasleitungen 113 ist dabei insbesondere derart, wie auch nachfolgend noch erläutert, dass entsprechende Gasblasen durch den Flüssigkeitsentnahmebereich 105 hindurchgeführt werden können, ohne dass diese über die Flüssigkeitsentnahmeöffnung 114 abgezogen werden können und damit die Pumpe 218 schädigen.

In dem Flüssigkeitsentnahmebereich 105 mündet die erwähnte Flüssigkeitsentnahmeöffnung 114, die insbesondere einen Wirbelbrecher 115 in ihrer Mündung aufweisen kann.

Wie mit unterschiedlichen Flüssigkeitsspiegeln L1 - L5 veranschaulicht, kann die Flüssigkeit in dem Flüssigkeitsinnenraum in unterschiedlichen Höhen anstehen. Diese richten sich nach einem entsprechenden Fühlstand in dem Kondensatabscheider 206. Der minimale Fühlstand ist mit L1, der maximale mit L5 bezeichnet. Die Gasleitungen der Gassammelböden münden dabei oberhalb des Flüssigkeitsentnahmebereichs 105, der unterhalb des minimalen Flüssigkeitsspiegels L1 liegt, und unter- oder oberhalb entsprechender Flüssigkeitsspiegel. Aus einem Gasraum oberhalb der Flüssigkeitsspiegel L1 - L5 kann Gas über den erwähnten Gasauslass 116 entnommen werden.

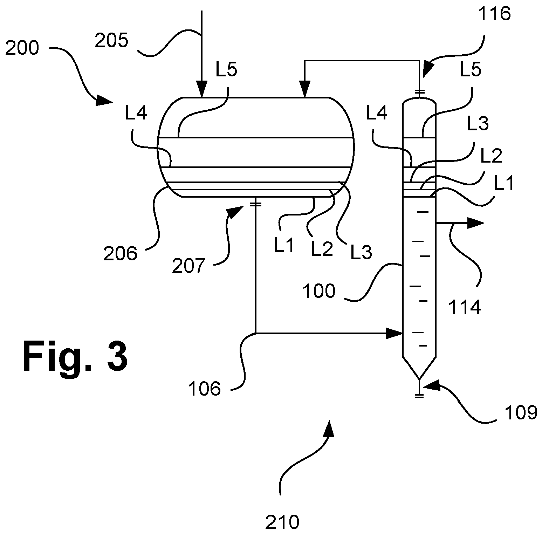

In Figur 3 ist der soeben erläuterte Sachverhalt unterschiedlicher Flüssigkeitsspiegel nochmals veranschaulicht. Die Figur 3 stellt dabei eine Teilansicht der Figur 1 dar, die dortigen Erläuterungen gelten entsprechend.

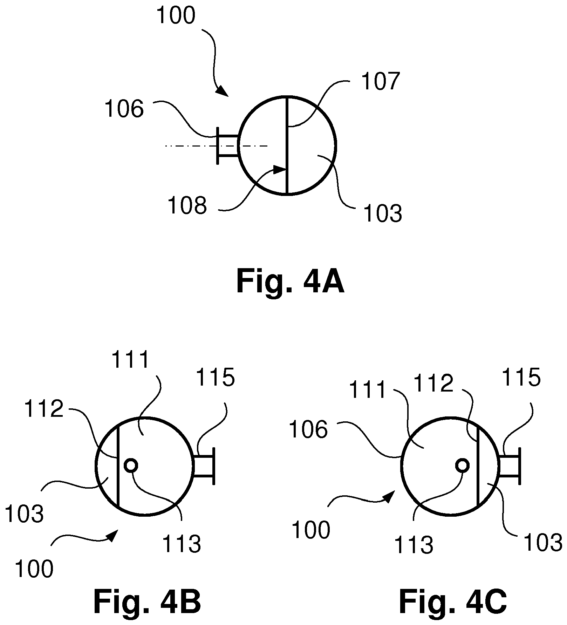

Die Figuren 4A - 4C veranschaulichen die bereits in Figur 2 gezeigten Säuleneinbauten nochmals in Form von Querschnittsansichten durch den Flüssigkeitseinspeisebereich 104 (Figur 4A) und den Gassammelbereich 110 (Figuren 4B und 4C).

Wie aus Figur 4A ersichtlich, ist ein Querschnitt des Behälterinnenraums 103 in dem Flüssigkeitseinspeisebereich 104 im Wesentlichen kreisförmig. Der Behälterinnenraum wird dabei durch die Trennwand in zwei Hälften unterteilt und die Trennwand 107 ist derart angeordnet, dass ihre in Richtung der Flüssigkeitseinspeiseöffnung 106 orientierte Fläche 108 in einem Winkel senkrecht zu der Leitungsachse der Flüssigkeitseinspeiseöffnung 106 angeordnet ist. Wenngleich im dargestellten Beispiel ein kreisförmiger Querschnitt des Behälterinnenraums 103 gezeigt ist, versteht sich, dass dieser Querschnitt auch im beanspruchten Umfang von einem kreisförmigen Querschnitt abweichen kann. Entsprechendes gilt selbstverständlich auch für die Orientierung der Trennwand 107.

In den Querschnittsdarstellungen der Figuren 4B und 4C sind jeweils Querschnitte durch den Gassammelbereich 110 oberhalb jeweils eines Gassammelbodens 111 veranschaulicht. Wie ersichtlich, decken die Gassammelböden 111 dabei den Behälterquerschnitt jeweils zu mehr als der Hälfte ab und die Gassammelböden 111 sind an unterschiedlichen Positionen zueinander versetzt angeordnet. Auf diese Weise ist sichergestellt, dass über den gesamten Querschnitt des Pumpenvorlagebehälters 111 aufsteigende Gas Blasen gesammelt und über die entsprechenden Gasleitungen 113 an den Flüssigkeitsentnahmebereich 105 vorbeigeführt werden können.

## Patentansprüche

1. Pumpenvorlagebehälter (100), für eine einer Pumpe (208) zuzuführende tiefkalte Flüssigkeit, mit einem sich zwischen einem Behältersumpf (101) und einem Behälterkopf (102) erstreckenden Behälterinnenraum (103), der einen in einem ersten Abstand in Richtung des Behälterkopfs (102) von dem Behältersumpf (101) beabstandeten Flüssigkeitseinspeisebereich (104) und einen in einem zweiten Abstand in Richtung des Behälterkopfs (102) von dem Behältersumpf (101) beabstandeten Flüssigkeitsentnahmebereich (105) umfasst, wobei der zweite Abstand größer als der erste Abstand ist, **dadurch gekennzeichnet, dass** in dem Flüssigkeitseinspeisebereich (104) eine Flüssigkeitseinspeiseöffnung (106) bereitgestellt ist, und dass der Behälterinnenraum (103) in dem Flüssigkeitseinspeisebereich (104) zumindest teilweise mittels einer Trennwand (107) unterteilt ist, die derart angeordnet ist, dass eine ihrer Flächen (108) in Richtung der Flüssigkeitseinspeiseöffnung (106) ausgerichtet ist.

2. Pumpenvorlagebehälter (100) nach Anspruch 1, bei dem sich der Behältersumpf (101) in einer dem Behälterinnenraum (103) abgewandten Richtung verjüngt und einen Feststoffabzug (109) aufweist.

3. Pumpenvorlagebehälter (100) nach Anspruch 1 oder 2, bei dem an die Flüssigkeitseinspeiseöffnung (106) eine Flüssigkeitseinspeiseleitung angebunden ist, die in ihrem Endbereich eine Leitungsachse aufweist, und bei der die Trennwand (107) derart angeordnet ist, dass ihre in Richtung der Flüssigkeitseinspeiseöffnung (106) ausgerichtete Fläche (108) in einem Winkel von 80 bis 100° zu der Leitungsachse angeordnet ist.

4. Pumpenvorlagebehälter (100) nach einem der vorstehenden Ansprüche, bei dem der Behälterinnenraum (103) in dem Flüssigkeitseinspeisebereich (104) einen Querschnitt aufweist, der durch die Trennwand (107) in zwei Teile unterteilt wird, deren Flächeninhalt sich um nicht mehr als 20% unterscheidet.

5. Pumpenvorlagebehälter (100) nach einem der vorstehenden Ansprüche, bei dem der Behälterinnenraum (103) zwischen dem Flüssigkeitseinspeisebereich (104) und dem Flüssigkeitsentnahmebereich (105) einen Gassammelbereich (110) umfasst, der Gassammelböden (111) aufweist, wobei die Gassammelböden (111) in Richtung des Behältersumpfs (101) ausgerichtete Gassammelstrukturen (112) aufweisen und wobei an die Gassammelböden (111) jeweils Gasleitungen (113) angebracht sind, die in Richtung des Behälterkopfs (102) verlaufen.

6. Pumpenvorlagebehälter (100) nach Anspruch 5, bei dem die Gassammelstrukturen (112) als sich in Richtung des Behältersumpfs (101) öffnende Wannenstrukturen ausgebildet sind.

7. Pumpenvorlagebehälter (100) nach Anspruch 5, bei dem die Gassammelstrukturen (112) in Form einer Anzahl von Rillen in den Gassammelböden (111) ausgebildet sind.

8. Pumpenvorlagebehälter (100) nach einem der Ansprüche 5 bis 7, bei dem in dem Gassammelbereich (110) zumindest zwei Gassammelböden (111) vorgesehen sind, die einen Querschnitt des Behälterinnenraums (103) jeweils teilweise abdecken und zueinander versetzt angeordnet sind.

9. Pumpenvorlagebehälter (100) nach einem der vorstehenden Ansprüche, bei dem in dem Flüssigkeitsentnahmebereich (105) eine Flüssigkeitsentnahmeöffnung (114) mit einem Wirbelbrecher (115) aus dem Behälterinnenraum (103) herausführt.

10. Rektifikationssystem (200) mit einer Rektifikationskolonne (201), die einen Kolonnenkopf (202) aufweist, wobei der Kolonnenkopf (202) mittels einer ersten Leitung (203) mit einer Kühleinrichtung (204) und die Kühleinrichtung (204) mittels einer zweiten Leitung (205) mit einem Kondensatabscheider (206) verbunden ist, der eine Flüssigkeitsentnahmeöffnung (207) aufweist, **gekennzeichnet durch** einen Pumpenvorlagebehälter (100) nach einem der vorstehenden Ansprüche, wobei die Flüssigkeitseinspeiseöffnung (106) des Pumpenvorlagebehälters (100) an die Flüssigkeitsentnahmeöffnung (207) angebunden ist.

11. Rektifikationssystem (200) nach Anspruch 10, das ferner die Pumpe (208) umfasst, die dazu eingerichtet ist, die tiefkalte Flüssigkeit aus dem Flüssigkeitsentnahmebereich (105) des Pumpenvorlagebehälters (100) auf den Kolonnenkopf (202) der Rektifikationskolonne (201) zurückzuführen.

12. Rektifikationssystem (200) nach Anspruch 10 oder 11, bei dem der Pumpenvorlagebehälter (100) einen Gasauslass (116) aufweist, der mit einem Gaseinlass (209) des Kondensatabscheiders (206) verbunden ist.

13. Verfahren zur Tieftemperaturrektifikation, **dadurch gekennzeichnet, dass** ein Pumpenvorlagebehälter (100) nach einem der Ansprüche 1 bis 9 oder ein Rektifikationssystem (200) nach einem der Ansprüche 10 bis 12 verwendet wird.

14. Verfahren nach Anspruch 13, bei dem die tiefkalte Flüssigkeit eine Temperatur von -90 bis -110 °C aufweist und der Pumpenvorlagebehälter (100) auf einem Druckniveau von 19 bis 25 bar (abs.) betrieben wird.
